# EUROPEAN PATENT APPLICATION

(11) **EP 1 536 639 A2**
(43) Date of publication of application: **01.06.2005**
(21) Application number: 04027125.6
(22) Date of filing: 15.11.2004
(51) Int. Cl.: H04N 5/76

(54) **Information recording and reproducing apparatus and information recording and reproducing method**

(30) Priority: 27.11.2003 JP 2003397811
(71) Applicant: Kabushiki Kaisha Toshiba, Tokyo 105-8001 (JP)
(72) Inventor: Kawamoto, Koutaro, c/o Toshiba Corp., Int. Prop., Tokyo 105-8001 (JP)
(74) Representative: Henkel, Feiler & Hänzel

(57) **Abstract**

Provided is an information recording and reproducing apparatus that has a recording device (1d), a determining section (1c) which determines that an amount of information recorded in the recording device (1d) has exceeded a preset threshold value, and a control section (1c) which, in accordance with the determination of the determining section (1c), transfers information whose recording has completed, the information being recorded in the recording device (2c), to the outside, and controls the amount of information recorded in the recording device (1d) to the threshold value.

## Description

The present invention relates to an information recording and reproducing apparatus comprising a large capacity storage device such as, for example, an HDD or a DVD.

As a prior art (Jpn. Pat. Appln. KOKAI Publication No. 2003-153164) of such an optical disk device, there exists a technique for storing overflowed motion picture data in a database server via a network in a picture recording and reproducing system.

However, the above-described technique has the following problem. That is, when motion picture data has been received, the data exceeding a capacity limit of a recording device which one's own apparatus has, that data is stored in an external database server via a network. After motion picture data received by, for example, a TV receiver or the like, has been temporarily buffered, when an attempt is made to reproduce the buffered data in order of streams in a state close to real time reproduction, data cannot be reproduced at a time point when the data has overflowed.

The present invention has been made in view of the above-described circumstance. It is object of the invention to provide an information recording and reproducing apparatus capable of continuously and smoothly recording and reproducing motion picture data or the like by efficiently using an external data storage mechanism and a recording device in one's own apparatus.

The present invention is characterized by an information recording and reproducing apparatus comprising: a recording device; determination means for determining that an amount of information recorded in the recording device has been a set threshold value (a threshold value); and control means for, in accordance with the determination of the determination means, transferring information whose recording has already completed, the information having been recorded in the recording device, to the outside, and controlling the amount of information recorded in the recording device to a value equal to or smaller than the threshold value.

In this manner, motion picture data or the like can be recorded and reproduced continuously and smoothly by efficiently using an external data storage mechanism and a recording device in one's own apparatus.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram depicting a configuration of an information recording and reproducing system according to an embodiment of the present invention;
FIG. 2 is a block diagram depicting a configuration of a data recording and reproducing apparatus according to the embodiment of the invention;
FIG. 3 is a flow chart showing processing procedures according to the embodiment of the invention;
FIG. 4 is a flow chart showing processing procedures according to the embodiment of the invention;
FIG. 5 is a conceptual view of an operation according to the embodiment of the invention; and
FIG. 6 is a conceptual view of an operation according to the embodiment of the invention.

Hereinafter, an embodiment of the present invention will be described with reference to the accompanying drawings.

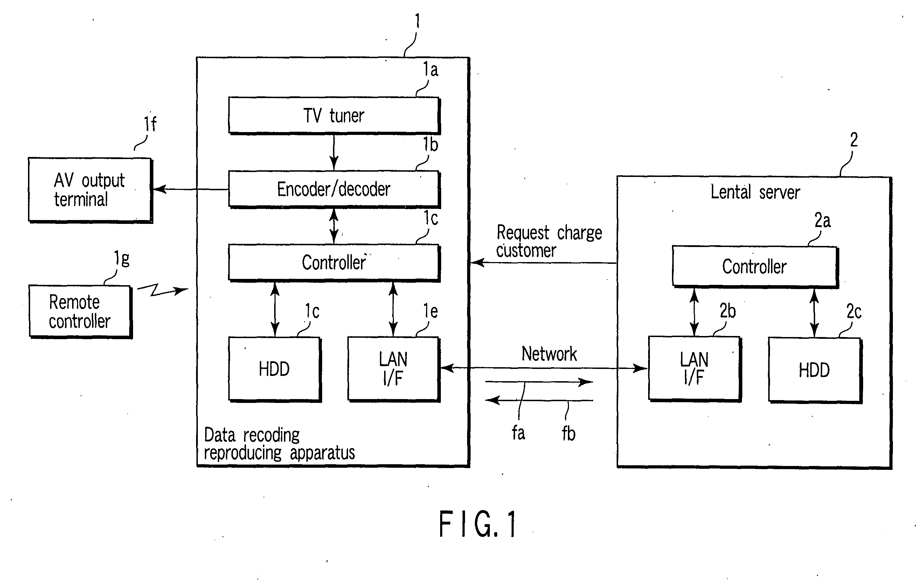

FIG. 1 shows a configuration of an information recording and reproducing system according to an embodiment of the present invention.

In the information recording and reproducing system according to the present embodiment, when a user connects the user owned data recording and reproducing apparatus to a rental server via a communication network such as the Internet. In the case where an amount of information recorded in a recording device of the user owned data recording and reproducing apparatus is close to a capacity limit of the recording device, the recorded data which has already been recorded in the recording device is automatically transferred (moved) to the rental server (refer to reference code "fa" of FIG. 1). Then, after, for example, reproduced data or the like has been erased from the recording device, when a free space of a predetermined capacity or more is allocated in the recording device, the data transferred to the rental server is returned to the recording device of the user owned data recording and reproducing apparatus (refer to reference code "fb" of FIG. 1). In this manner, the use can reproduce motion picture data or the like continuously and smoothly by using a data recording and reproducing apparatus having a comparatively small recording capacity. In addition, an amount of data in a unit time interval recorded in the rental server is reduced to the minimum, whereby a rental charge accounted to the user can be reduced.

In FIG. 1, a data recording and reproducing apparatus 1 has a function for recording and reproducing a video signal as digital data. Although this data recording and reproducing apparatus 1 can be provided by, for example, an HDD recorder or a DVD recorder, or alternatively, a home server or the like, the apparatus is assumed to be provided by using the HDD recorder.

The data recording and reproducing apparatus 1 incorporates functional elements such as a TV tuner 1a, an encoder/decoder 1b, a controller 1c, an HDD (hard disk drive) 1d, a communication interface (LAN I/F) 1e, and the like. Further, in the data recording and reproducing apparatus 1, there are provided: an AV output terminal 1f comprising a display and a speaker for reproducing a video or a voice signal; a remote controller 1g for supplying a variety of commands according to recording/reproducing of the data recording and reproducing apparatus 1; and the like.

The TV tuner 1a receives a TV radio wave. The encoder/decoder 1b converts the video signal or voice signal received by the tuner 1a into digital data or restores the digital data recorded in the HDD 1d in a video signal or a voice signal which can be reproduced by the AV output terminal 1f. The controller 1c makes control of the whole data recording and reproducing apparatus 1. The HDD 14 records digital data such as a video or a voice under the control of the controller 1c. The communication interface 1e carries out delivery of digital data via a network such as the Internet.

The data recording and reproducing apparatus 1 having the above configuration can make connection to the rental server 2 via a network.

The rental server 2 to which the data recording and reproducing apparatus 1 make connection via a network incorporates a controller 2a, a communication interface (LAN I/F) 2b, an HDD 2c and the like.

The controller 2a makes control of the whole rental server 2. The communication interface 2b carries out delivery of digital data via a network such as the Internet. The HDD 2c records digital data under the control of the controller 2a.

In the above-described data recording and reproducing apparatus 1, the TV signal received by the TV tuner 1a is converted into a digital signal by means of the encoder/decoder 1b. In the case where digital data is stored, the data is recorded in the HDD 1d under the control of the controller 1c.

At this time, a maximum recording capacity of the HDD 1d is predetermined. After data has been in the whole the recording capacity, new data cannot be recorded only by processing other than erasing or overwriting data which was recorded in the past.

In the present invention, in the case where the whole recording capacity of the HDD 1d must be used in this manner, for example, a set of the oldest data recorded in the HDD 1d is transferred via the communication interface 1e, 2b to the rental server 2 which exists at the outside of the data recording and reproducing apparatus 1, a free space is provided in the HDD 1d, thereby making it possible to continuously record new data in the free space. A processing operation of the data recording and reproducing apparatus 1 will be described later.

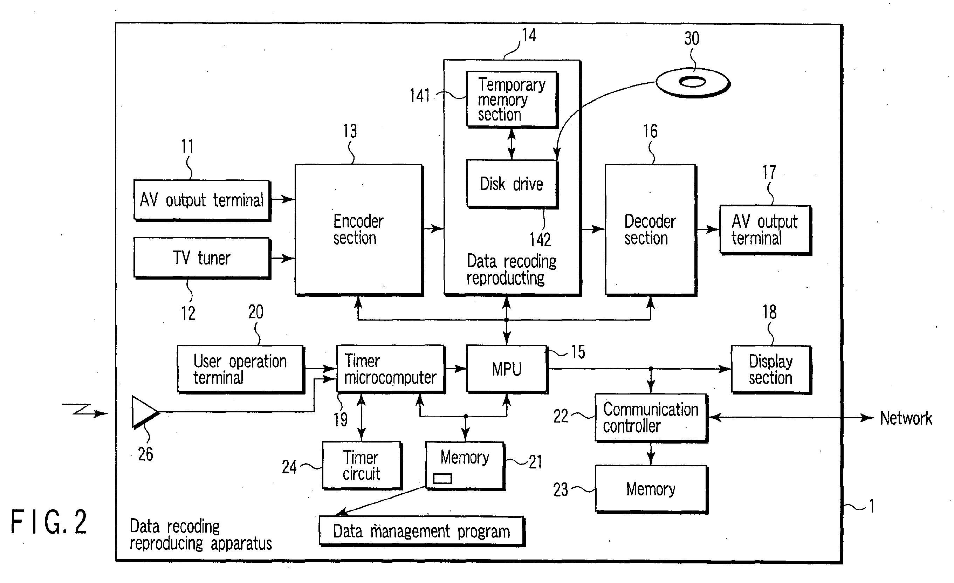

FIG. 2 shows a more specific internal configuration of the above-described data recording and reproducing apparatus 1.

The data recording and reproducing apparatus 1 shown in FIG. 2 has: a data recording and reproducing section 14 capable of recording input information in a predetermined recording medium and reproducing information which has already been recorded in the recording medium according to a reproduction request; and a microprocessor (MPU) 15 for controlling recording into the data recording and reproducing section 14 and reproduction from the data recording and reproducing section 14 and an operation of each of the sections describe below.

The data recording and reproducing section 14 includes: a disk drive unit 142 which conforms to, for example, a DVD (Digital Versatile Disk) standard, and which can record and reproduce information in a disk manufactured in the compatible standard; and a temporary recording section 141 capable of temporarily holding data recorded in a disk 30 set to the disk drive unit 142 or a predetermined amount of data recorded from the disk 30. In the present embodiment, by processing of a data management program stored in a memory 21, when an amount of data recorded in the disk 30 exceeds a predetermined capacity limit determination point (threshold value), a set of the oldest recorded data such as a title unit, a folder unit, or a file unit is transferred to the rental server 2 shown in FIG. 1 via a communication control section 22 and a network. Further, when the data recorded in the disk 30 has been erased (deleted) by a user operation, it is determined whether or not the data transferred to the rental server 2 can be restored in a range which does not exceeds the capacity limit determination point (threshold value) by that data erasing. When the determination result is affirmative, the data stored in the rental server 2 is returned to the disk 30.

An encoder section 13 for encoding inputted information so that the data recording and reproducing section 14 can record the information and a decoder section 16 for decoding information outputted from the data recording and reproducing section 14 so that an output device described below can display the information are connected to the data recording and reproducing section 14.

An AV (audio/video) input terminal 11 capable of inputting information targeted for recording from the outside and a tuner section (TV tuner) 12 capable of receiving a video and a voice distributed from an information distributor represented by, for example, a broadcast service provider, are connected to the encoder section 13.

An AV output terminal 17 for supplying reproduction information decoded by the decoder section 16 to an output device represented by a reproducing device (television) or a monitor device is connected to the decoder section 16.

To the above-described MPU 15, there is connected a timer microcomputer section 19 capable of inputting recording reservation information such as a recording (broadcast) start date and time/recording (broadcast) end date and time, a recording source, a recording rate and a recording system (voice recording format) from a main body of the data recording and reproducing apparatus 1 or a remote control device (not shown) which is an accessory.

To the timer microcomputer section 19, there are connected: a timer circuit (clock unit) 24 for managing a time utilized for management of an operation of the data recording and reproducing apparatus 1; a user operation input section 20 for receiving a user operating request (command); and an infrared-ray input port 26 of the remote controller 1g.

Further, to the above-described MPU 15, there are connected: a display section 18 for displaying information inputted to the timer microcomputer section 19 or an'operating state of the main body of the data recording and reproducing apparatus 1; a communication control section 22 capable of broadcasting an input such as a recording reservation from the outside via a network and the availability of recording reservation to a specified transmission destination; and a memory 23 providing a recording reservation management table capable of holding recording reserved information or the like. At the communication control section 22, there are provided in advance: browser software widely used in a network (application software capable of searching or browsing information in a network); and dialer or the like, although not shown, capable of transmitting E-mail to the outside under a predetermined condition.

The MPU 15 makes disk 30 recording control, copy control, and erasing control in accordance with a control program stored in the memory 21. In addition, in accordance with the stored control program, this MPU controls a change of an operation of the recording and reproducing apparatus inputted to the timer microcomputer section 19 via the user operation input section 20 and use display using the display section 18.

The timer microcomputer section 19 manages recording reservation information set by a user while monitoring the timer circuit (clock unit) 24. At a time point when a recording reservation start time has been reached, this timer microcomputer section instructs the MPU 15 to start recording. In addition, at a time period when a recording reservation end time has been reached, the timer microcomputer section instructs the MPU 15 to terminate recording.

The user operation input section 20 includes a data receiver section and a control signal input section (not shown). The data receiver section can receive an operating request from a user, for example, a change of an operation of the recording and reproducing apparatus, or alternatively, recording reservation information, and receives a control signal (remote control terminal), although not shown. The control signal input section can output a control signal to the timer microcomputer section 19 in response to a direct input command from the user by using an operating panel (not shown) of the main body of the apparatus 1. The TV tuner 12 corresponds to the TV tuner 1a shown in FIG. 1; the encoder section 13 and decoder section 16 correspond to the encoder/decoder 1b shown in FIG. 1; the MPU 15 corresponds to the controller 1c shown in FIG. 1; the data recording and reproducing section 14 corresponds to the HDD 1d shown in FIG. 1; and the communication control section 22 corresponds to the communication interface 1e shown in FIG. 1. Now, a subsequent description of operation of the data recording and reproducing apparatus 1 will be given with reference to the configuration shown in FIG. 1.

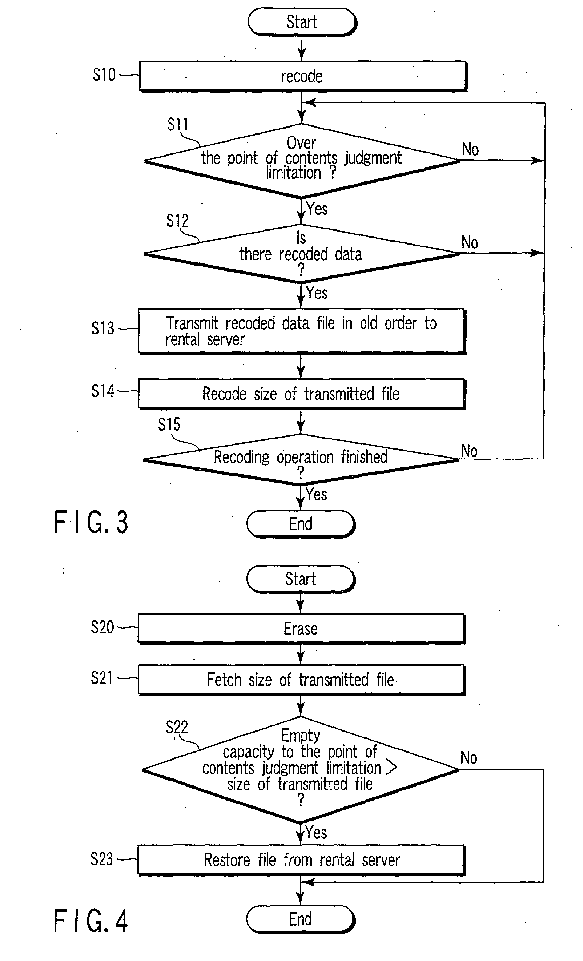

FIGS. 3 and 4 are flow charts each showing a processing routine of a program executed by the controller 1c (MPU 15). FIG. 3 shows processing procedures when data is recorded in the HDD 1d (data recording and reproducing section 14). FIG. 4 shows processing procedures when data has been erased from the HDD 1d.

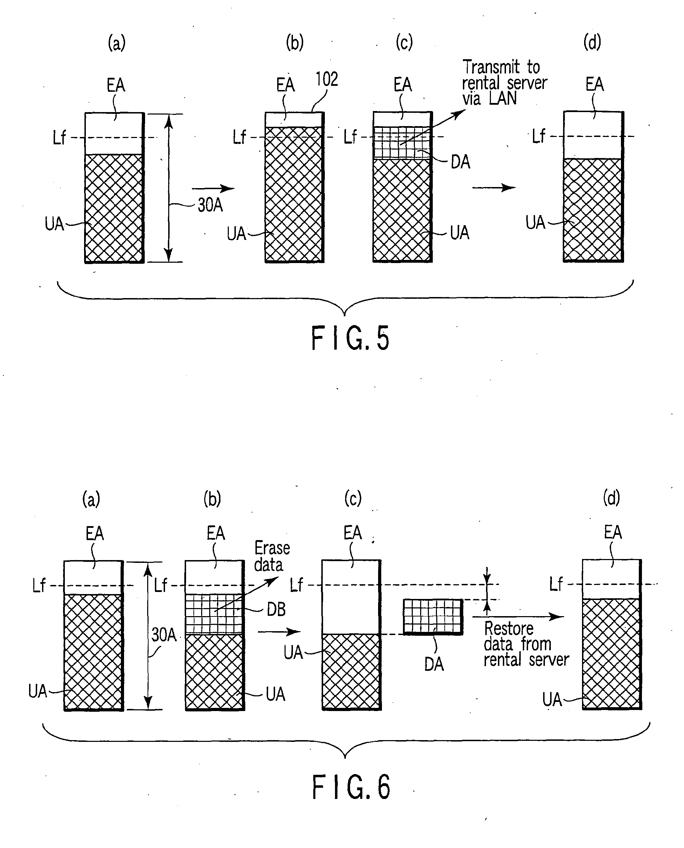

FIGS. 5 and 6 are operating conceptual views of management of recorded data in the HDD 1d, respectively. FIG. 5 is an operating conceptual view in the case where an amount of data recorded in the HDD 1d has exceeded a predetermined capacity limit determination point (threshold value). FIG. 6 is an operating conceptual view in the case where, after recorded data has been erased from the HDD 1d, the data is returned from the rental server 2 to the HDD 1d. In FIGS. 5 and 6, reference numeral 30A denotes a maximum recording capacity of the HDD 1d; reference code UA denotes a recorded region of the HDD 1d; reference code EA denotes a recordable (free) space of the HDD 1d; reference code Uf denotes a predetermined capacity limit determination point (threshold value); reference code DA denotes transfer data; and reference code DB denotes erasure data.

Now, a processing operation for recording data in the HDD 1d will be described with reference to FIGS. 3 and 5.

When data is recorded in the HDD 1d, the controller 1c monitors whether or not an amount of data (UA) recorded in the HDD 1d has exceeded a predetermined capacity limit determination point (threshold value) (refer to steps S10 and S11 of FIG. 3, and (a) in FIG. 5).

If it is determined that an amount of data recorded in the HDD 1d has exceeded a predetermined capacity limit determination point (threshold value) (Lf) (refer to step S11 "Yes" of FIG. 3, and (b) in FIG. 5), it is checked whether or not recorded data exists in the HDD 1d (step S12 of FIG. 3). When the recorded data exists, for example, a set of data (DA) including the oldest recording date and time in accordance with a predetermined condition is transferred to the rental server 2 (refer to step S13 of FIG. 3, and (c) in FIG. 5). The size of the transferred data (DA) is recorded (step S14 of FIG. 3). By transferring data to this rental server 2, the recorded region (UA) of the HDD 1d is lower than a capacity limit determination point (threshold value) (Lf) (refer to (d) in FIG. 5), and concurrently, a recordable region (EA) increases. Thus, data can be continuously recorded in that recordable region (EA). Such a monitoring processing is repeatedly executed until a data recording operation has terminated (step S15 of FIG. 3).

Now, a processing operation for erasing data from the HDD 1d will be described with reference to FIGS. 4 and 6.

When the data recorded in the HDD 1d has been erased (deleted) by the user operation (refer to step S20 of FIG. 4, and FIGS. 6A and 6B), the recordable region (EA) of the HDD 1d increases by the capacity of that deleted data (DB). At this time, size information on the data held (refer to step S14 of FIG. 3) and transferred during transfer of the above data is acquired (step S21 of FIG. 4). Then, it is determined whether or not the current amount of recorded data in the HDD 1d is smaller than the capacity limit determination point (threshold) (Lf) even by adding the size of the transferred data. When the capacity limit determination point (threshold value) (Lf) is exceeded or when the capacity limit determination point (threshold value) (Lf) is reached (step S22 "No" of FIG. 4), processing for returning the transferred data is not carried out. When an amount of recorded data (UA) in the HDD 1d is smaller than the capacity limit determination point (threshold value) (Lf) even by adding the size of the data transferred to the rental server 2 (refer to step 22 "Yes" of FIG. 4, and 1C), data is returned from the rental server 2 to the HDD 1d (refer to step S23 of FIG. 4, and (d) in FIG. 6).

By providing such a processing function, the user can record and reproduce motion picture data or the like continuously and smoothly by using an inexpensive data recording and reproducing apparatus having a comparatively small recording capacity. In addition, the user can reduce a rental charge accounted to the user by reducing to the minimum an amount of data per a unit time interval recorded in the rental server. In a process for transferring data to the rental server 2 and a process for returning data from the rental server 2, usability can be extended every time by providing a user interface for requesting a command to the user. With respect to the user interface, a GUI screen which has already been applied in another process can be used. For example, data (such as size and attribute) which can be transferred to the rental server 2 is present to the user in the form of listing, and the data to be stored (rented) in the rental server 2 can be selected.

## Claims

1. An information recording and reproducing apparatus **characterized by** comprising:
a recording device (1d);
a determining section (1c) which determines that an amount of information recorded in the recording device has exceeded a preset threshold value; and
a control section (1c) which, in accordance with the determination of the determining section, transfers information whose recording has completed, the information being recorded in the recording device, to the outside, and controls the amount of information recorded in the recording device to the threshold value.

2. An information recording and reproducing apparatus according to claim 1, **characterized in that** the control section (1c) further has a section which, when a predetermined free space can be allocated in the recording device, returns the information transferred to the outside to the recording device.

3. An information recording and reproducing apparatus according to claim 1, **characterized in that** the control section (1c) further has a section which determines whether or not to return the information transferred to the outside to the recording device based on a size of the information transferred to the outside, an amount of information currently recorded in the recording device, and the threshold value.

4. An information recording and reproducing apparatus according to claim 3, **characterized in that** the control section (1c) further has a section which, in accordance with the determination of the determining section, transfers information which is the oldest and whose recording has completed, from among the information recorded in the recording device, to the outside.

5. An information recording and reproducing apparatus according to claim 1, **characterized in that** the control section (1c) further has a section which, in accordance with the determination of the determining section, transfers information which is the largest in size and whose recording has completed, from among the information recorded in the recording device, to the outside.

6. An information recording and reproducing apparatus according to claim 3, **characterized in that** the control section (1c) further has a section which, in accordance with the determination of the determining section, transfers all information whose recording has completed, to the outside, the information being recorded in the recording device.

7. An information recording and reproducing apparatus according to claim 3, **characterized in that** the control section (1c) further has a section which erases the reproduced information from the recording device.

8. An information recording and reproducing apparatus according to claim 1, **characterized in that** the control section (1c) further has an operation input section which, in accordance with the determination of the determining section, causes a user to select whether or not information whose recording has completed is transferred to the outside, the information being recorded'in the recording device.

9. An information recording and reproducing apparatus according to claim 2, **characterized in that** the control section (1c) further has an operation input section which, when a predetermined free space can be allocated in the recording device, causes a user to select whether or not to return the information transferred to the outside to the recording device.

10. An information recording and reproducing apparatus according to claim 1, **characterized in that** a transfer destination for transferring information by the control section (1c) is a server device which carries out an accounting process, the server device being connected via a network.

11. An information recording and reproducing method **characterized by** comprising:
determining that an amount of information recorded in a recording device has exceeded a preset threshold value; and
in accordance with the determination result, transferring information whose recording has completed, to the outside, the information being recorded in the recording device, and controlling the amount of information recorded in the recording device to a value equal to or smaller than the threshold value (1c).

12. An information recording and reproducing method according to claim 11, **characterized by** further comprising:
when a predetermined free space can be allocated in the recording device, returning the information transferred to the outside to the recording device.

13. An information recording and reproducing method according to claim 11, **characterized by** further comprising:
determining by the control section (1c) whether or not to return to the recording device the information transferred to the outside based on a size of the information transferred to the outside, an amount of information currently recorded in the recording device; and the threshold value.

14. An information recording and reproducing method according to claim 13, **characterized by** further comprising:
in accordance with the determination, transferring information which is the oldest and whose recording has completed, to the outside, from among the information recorded in the recording device.

15. An information recording and reproducing method according to claim 11, **characterized by** further comprising:
in accordance with the determination, transferring information which is the largest in size and whose recording has completed, to the outside, from among the information recorded in the recording device.

16. An information recording and reproducing method according to claim 13, **characterized by** further comprising:
in accordance with the determination, transferring all information whose recording has completed, the information being recorded in the recording device.

17. An information recording and reproducing method according to claim 13, **characterized by** further comprising:
in accordance with the determination, erasing the reproduced information from the recording device.

18. An information recording and reproducing method according to claim 11, **characterized by** further comprising:
in accordance with the determination, causing a user to select whether or not to transfer information whose recording has completed, the information being recorded in the recording device, to the outside.

19. An information recording and reproducing method according to claim 12, **characterized by** further comprising:
when a predetermined free space can be allocated in the recording device, causing a user to select whether or not to return the information transferred to the outside to the recording device.

20. An information recording and reproducing method according to claim 11, **characterized by** further comprising:
a transfer destination for transferring information being a server device which carries out an accounting process, the server device being connected via a network.
